# FASCICULE DE BREVET EUROPEEN

(11) **EP 3 746 812 B1**
(45) Date de publication et mention de la délivrance du brevet: **16.11.2022**
(21) Numéro de dépôt: 19718785.9
(22) Date de dépôt: 21.03.2019
(51) Int. Cl.: G01T 1/169, G01T 7/00

(54) **DISPOSITIF DE MESURE DE RAYONNEMENTS ALPHA ET/OU BÊTA PROVENANT D'UNE SURFACE SOLIDE**
VORRICHTUNG ZUR MESSUNG DER VON EINER FESTEN OBERFLÄCHE AUSGEHENDEN ALPHA- UND/ODER BETA-STRAHLUNG
DEVICE FOR MEASURING ALPHA AND/OR BETA RADIATION EMANATING FROM A SOLID SURFACE

(30) Priorité: 23.03.2018 FR 1852563
(43) Date de publication de la demande: 09.12.2020
(73) Titulaire: Commissariat à l'énergie atomique et aux énergies alternatives, 75015 Paris (FR); Agence Nationale pour la Gestion des Déchets Radioactifs, 92298 Châtenay-Malabry (FR); ATELIERS LAUMONIER, 95690 Nesles-La-Vallee (FR); CENTRE NATIONAL DE LA RECHERCHE SCIENTIFIQUE, 75794 Paris Cedex 16 (FR); Universite De Poitiers, 86073 Poitiers (FR)
(72) Inventeur: FICHET, Pascal, 78300 Poissy (FR); LEBLOND, Sylvain, 91400 Orsay (FR); LAUMONIER, Rémi, 75009 Paris (FR); WORD, Hamilton, 92200 Neuilly sur Seine (FR); SARDINI, Paul, 86210 Bonneuil-Matours (FR); BILLON, Sophie, 86000 Poitiers (FR)
(74) Mandataire: Brevalex
(86) Numéro de dépôt international: PCT/FR2019/050648
(87) Numéro de publication internationale: WO 2019/180386

(56) Documents cités:
- WO-A1-2014/173644
- WO-A1-2016/055594
- US-A- 5 514 870
- US-A- 5 936 240
- Frank Mascarich ET AL: "Towards Robotically Supported Decommissioning of Nuclear Sites", arXiv, 17 mai 2017 (2017-05-17), XP055525190, Extrait de l'Internet: URL:https://pdfs.semanticscholar.org/7b3b/ 714fd938a5d8cba5e225deb3a197b4cdcfad.pdf [extrait le 2018-11-20]

## Description

### DOMAINE TECHNIQUE

L'invention concerne le domaine de la détection de rayonnements provenant d'isotopes radioactifs. Plus particulièrement, l'invention concerne la détection de rayonnements bêta (β) et/ou de rayonnements alpha (α) émis par une surface solide contaminée. Le système selon l'invention permet notamment de réaliser une imagerie instantanée de la contamination d'une surface solide, ainsi qu'une cartographie de la position de radionucléides bêta et/ou alpha à l'échelle d'une installation. Pour cela, l'invention porte sur un dispositif autonome totalement automatisé muni d'un automate qui permet de déplacer au moins une tête de mesure sur la surface solide à étudier.

L'invention trouve notamment une application dans le domaine de l'assainissement et du démantèlement d'une installation contaminée par des radionucléides alpha et/ou bêta ou sur des contrôles généraux de surfaces contaminées dans des installations nucléaires au sens large.

### ÉTAT DE LA TECHNIQUE ANTÉRIEURE

Il est important de pouvoir détecter et quantifier l'activité des rayonnements radioactifs dans un environnement, par exemple sur un site nucléaire, notamment avant son démantèlement (c'est-à-dire pendant son fonctionnement) et pendant son démantèlement, afin de connaître les risques que les personnes présentes sur le site encourent et de leur fournir les protections adéquates. Il est ainsi nécessaire de réaliser des mesures localisées sur des déchets solides de toute sorte (béton, plastique, métaux, etc.). Une mesure de contamination sur des déchets nucléaires permet également de bien orienter ces déchets vers les exutoires adaptés.

Enfin, et de façon plus générale, la mesure de radionucléides permet de contrôler le fonctionnement de certaines installations, hors démantèlement. Par exemple, pour des installations en fonctionnement, il est souhaitable de contrôler, au cours de l'exploitation, la présence de contamination par des radionucléides (pour les réacteurs à fusion notamment).

Dans le cadre de la présente invention, on s'intéresse à la mesure et à la détection de radionucléides émetteurs alpha et/ou bêta. Ces radionucléides, contrairement à ceux émettant des rayonnements de type gamma (y), de type X ou des neutrons (qui sont tous qualifiées de « très pénétrants »), sont difficiles à détecter car le libre parcours moyen de leur rayonnement dans la matière est très faible. A ce propos, les rayonnements β sont qualifiés de « moyennement pénétrants » et peuvent être arrêtés par une feuille d'aluminium de quelques millimètres d'épaisseur maximum ; les rayonnements α sont qualifiés de « peu pénétrants » et peuvent être arrêtés par une simple feuille de papier. A titre de comparaison, les rayonnements gamma peuvent être atténués par une forte épaisseur de plomb ou de béton.

Aujourd'hui, afin de détecter les rayonnements α ou β sur une surface solide, on réalise des prélèvements par carottage ou par frottis, ce qui a pour conséquence de détruire la surface solide étudiée, et nécessite l'utilisation d'un scintillant liquide. A titre d'exemple, le document [1] décrit le démantèlement du synchrotron Saturne II, en fonctionnement de 1979 à 1997 à Saclay en France. Préalablement à la mesure, un carottage est réalisé dans le béton de la structure du synchrotron. Le tritium ³H est ensuite mesuré sur ces carottes par comptage grâce à un scintillateur liquide. La méthode de préparation des échantillons n'est pas détaillée dans ce document, mais il faut *a minima* transformer le béton en liquide pour réaliser une mesure destructive par scintillation liquide. Cela nécessite donc une analyse destructive des échantillons à la différence du procédé proposé par cette invention.

Les techniques de carottage et de frottis ne permettent qu'une étude locale et partielle d'un site ; elles sont incapables de montrer l'emplacement des points dits chauds ou actifs sur une surface. En outre, il faut prendre en compte l'incertitude associée à la représentativité de l'échantillon analysé. Ces prélèvements nécessitent en outre des analyses *a posteriori* qui sont difficiles à mener de manière rigoureuse et qui ne fournissent généralement des résultats qu'après quelques jours.

Etant donné que les autorités de sécurité nucléaire demandent un maximum de mesures, les mesures non destructives, précises et autonomes (c'est-à-dire des mesures ne modifiant pas l'intégrité physique de l'échantillon) apparaissent comme la solution la plus adaptée pour réaliser des contrôles de contamination. De tels dispositifs existent déjà, mais ils sont malheureusement imparfaits et ne réalisent pas de cartographie autonome.

Par exemple, un dispositif pour la mesure du tritium ³H de manière non destructive est décrit dans le document [2]. Le dispositif comprend une tête de connexion composée d'une extrémité d'un tuyau d'aspiration, d'éléments de chauffage et de ventouses de fixation pour la fixation à une surface solide. Pour réaliser la mesure, la tête de connexion est placée sur la surface solide, dans ce cas en béton. Des éléments chauffent à 200°C le béton sur la partie couverte par la tête de connexion, faisant ainsi s'évaporer l'eau présente dans le béton. La pompe permet d'aspirer la vapeur d'eau s'échappant du béton. Lorsque la vapeur d'eau atteint un piège à froid, celle-ci se refroidit jusqu'à se condenser en eau liquide, qui sera utilisée par la suite pour la mesure du tritium ³H contenu dans cette eau.

Outre le fait que cette technique ne peut être utilisée qu'avec le tritium (car il est très soluble dans l'eau), un des inconvénients du dispositif décrit dans le document [2] est de permettre de discrétiser la surface solide seulement en fractions de la taille de la tête de connexion. Ainsi, la technique a une précision qui n'est que très relative dans sa localisation de la contamination. Cette technique suppose aussi que le tritium ³H est labile, alors qu'il peut très bien être lié fortement au béton. Le tritium peut aussi être fortement lié à des matériaux autres que le béton, comme l'aluminium par exemple, qui ne contiennent pas de vapeur d'eau, rendant cette technique non utilisable.

D'autres techniques de mesures des rayonnements α et β existent, comme notamment les appareils de radioprotection de type contaminamètre. De tels appareils ne donnent cependant que des analyses globales, sans aucune image ni cartographie. En cas de présence d'une contamination radioactive, on n'a donc aucune idée de la forme ou de la répartition de celle-ci. L'invention proposée permettra de palier à ce défaut majeur. Enfin, le document [3] décrit un dispositif de mesure non destructive des rayonnements alpha et/ou bêta émis par une surface plane d'un solide, le dispositif comprenant une tête de mesure qui comprend: au moins un scintillateur solide primaire ayant une face principale plane positionnée proche d'une portion de la surface plane; au moins un photomultiplicateur, chaque photomultiplicateur étant couplé optiquement à un scintillateur solide primaire; un boîtier opaque à la lumière visible et aux rayonnements alpha et bêta ayant une cavité ouverte destinée à loger ledit au moins un scintillateur solide primaire et ledit au moins un photmultiplicateur, ledit scintillateur solide primaire étant agencé pour fermer la cavité et former une paroi externe du boîtier; et un automate motorisé, configuré pour déplacer une tête de mesure. Le dispositif du document [3] comprend également un élément de protection situé entre ledit au moins un scintillateur et la surface du solide à inspecter.

### EXPOSÉ DE L'INVENTION

L'invention a pour objectif de permettre une cartographie bi ou tridimensionnelle des rayonnements alpha et/ou bêta émis par une surface solide en utilisant une technique de mesure non destructive, simple à mettre en œuvre, à l'aide d'un appareil de détection autonome, portable ou transportable, et déployable sur le terrain.

A cet effet, elle propose un dispositif de mesure non destructive des rayonnements alpha et/ou bêta émis par une surface plane d'un solide, selon la revendication 1, le dispositif comprenant :
- au moins une tête de mesure qui comprend :
   - au moins un scintillateur solide primaire (3) ayant une face principale (5) plane destinée à être mise en contact avec une portion de la surface plane (S) ;
   - au moins un photomultiplicateur en silicium (SiPM) (4), chaque SiPM étant couplé optiquement à un scintillateur solide primaire (3) ;
   - un boîtier (2), opaque à la lumière visible et aux rayonnements alpha et bêta, ayant une cavité (11) ouverte destinée à loger ledit au moins un scintillateur solide primaire et ledit au moins un SiPM, ledit scintillateur solide primaire étant agencé pour fermer la cavité et former une paroi externe du boitier, de manière à permettre la mise en contact dudit scintillateur primaire avec la portion de surface (S) ;
- un automate motorisé, configuré pour déplacer une tête de mesure et la placer au contact de la surface plane.

L'automate est dit « motorisé » car il peut se déplacer à l'aide d'un ou plusieurs moteurs. Plus particulièrement, l'automate est un système de déplacement autonome qui permet de placer une tête de mesure au contact de la surface plane à étudier. Il est qualifié d'autonome car il conduit la ou les têtes de mesure vers une destination souhaitée sans intervention humaine directe. Le guidage de l'automate peut par exemple se faire à distance à l'aide d'ondes radio ou bien encore au travers d'un réglage pré-enregistré par l'utilisateur.

L'automate permet, grâce à un ou plusieurs moteurs de précision, de placer précisément au moins une tête de mesure au contact de la surface plane à étudier, rendant possible une mesure de radionucléides difficilement mesurables. De préférence, on utilisera un automate apte à se déplacer de manière autonome et permettant d'obtenir, sur une surface prédéfinie de l'ordre du m², un placement d'une tête de mesure de manière stable et précis (avec une précision sur le placement de l'ordre du millimètre). L'automate peut par exemple être une table XYZ motorisée ou un bras articulé multi axes. On peut ainsi avoir un positionnement XYZ, précis dans l'espace, de la tête de mesure.

Selon un mode de réalisation de l'invention, l'automate motorisé comporte une base motorisée, qui est munie d'au moins un bras articulé qui peut bouger en translation et/ou en rotation. Chaque bras articulé est configuré pour déplacer une tête de mesure et la placer au contact de la surface plane. Chaque bras articulé peut par exemple être configuré pour être équipé, à une extrémité distale, d'une tête de mesure et être relié, par une extrémité proximale, à la base motorisée de l'automate.

Dans le cadre de la présente invention, on qualifie un boîtier ou un matériau d'« opaque » à un rayonnement lorsque ce boîtier ou ce matériau stoppe au minimum 95 % de ce rayonnement, de préférence au minimum 99 %.

Le boîtier opaque à la lumière visible et aux rayonnements alpha et bêta est donc réalisé en un matériau non pénétrable par les rayonnements auxquels est sensible le ou les scintillateurs solides de ladite au moins une tête de mesure du dispositif de mesure ; il peut par exemple être réalisé en plomb. Le boîtier permet d'éviter que de la lumière parasite provenant de l'environnement autour de la surface solide à étudier ne vienne perturber les mesures. Cela permet donc d'améliorer la sélectivité de la mesure pour les radionucléides émetteurs alpha ou bêta.

Ainsi, au moins le boîtier de la ou des têtes de mesure est opaque à la lumière visible et aux rayonnements alpha et bêta. Mais il est également possible de protéger l'automate au complet (y compris son ou ses éventuels bras articulés) avec un tel matériau opaque, par exemple en le recouvrant d'un blindage en plomb. Cela permet notamment de protéger l'électronique embarquée dans l'automate ; cette protection a en outre pour effet de limiter considérablement le bruit de fond des détecteurs SiPM.

Il est également possible, selon une variante de l'invention, de recouvrir la face principale d'un scintillateur solide primaire d'une tête de mesure par une couche en un matériau opaque à la lumière visible, mais qui va laisser passer certains rayonnements ionisants. On entend par « rayonnements ionisants » les rayonnements de particules capables de provoquer l'ionisation des atomes, ou des molécules, des matériaux rencontrés sur leur passage. C'est-à-dire qu'ils ont une énergie suffisante pour transformer les atomes en ions. Il s'agit donc notamment des rayonnements alpha, bêta, gamma. Il peut par exemple s'agir d'une couche en poly(téréphtalate d'éthylène) (ou Mylar^{™}). Cela permet de réduire le bruit lumineux enregistré par le dispositif, améliorant de ce fait les propriétés de détection du dispositif. Par contre, la présence d'une telle couche rend le dispositif opaque aux rayonnements ionisants les moins pénétrants (tels que ceux provenant du tritium).

Selon l'invention, chaque tête de mesure peut comprendre un scintillateur primaire unique. Elle peut également en contenir plusieurs.

Selon un mode de réalisation de l'invention, une tête de mesure comprend une pluralité de SiPM électriquement indépendants les uns des autres et agencés dans un même plan sous forme matricielle.

On entend par « forme matricielle » un agencement sous forme de i lignes et j colonnes, i et j étant des nombres entiers supérieurs ou égaux à 1, et la somme de i et j étant supérieure à 2.

Selon un autre mode de réalisation de l'invention, une tête de mesure comprend une pluralité de scintillateurs solides primaires agencés dans un même plan sous forme matricielle, les scintillateurs solides primaires étant réalisés dans un matériau identique et ayant une même épaisseur.

Selon un mode de réalisation de l'invention, dans au moins une tête de mesure, le nombre de scintillateurs solides primaires est égal ou inférieur au nombre de SiPM.

Selon un mode de réalisation de l'invention, une tête de mesure comprenant plusieurs scintillateurs solides comprend en outre des éléments de séparation en matériau opaque aux photons, qui sont disposés aux interfaces des scintillateurs solides primaires adjacents, de manière à rendre les scintillateurs solides primaires d'une même tête de mesure optiquement indépendants les uns des autres. Cela permet d'améliorer la résolution spatiale des mesures, ce qui permet d'obtenir une cartographie de contamination précise.

Selon un autre mode de réalisation de l'invention, une tête de mesure comprend en outre au moins un scintillateur solide secondaire, ledit scintillateur solide secondaire étant agencé empilé sur un scintillateur solide primaire, en contact avec une face opposée à la face principale dudit scintillateur solide primaire ; les scintillateurs secondaires peuvent ou non être en un même matériau et peuvent ou non avoir une même épaisseur que le ou les scintillateurs primaires.

Selon un mode de réalisation de l'invention, ladite au moins une tête de mesure est configurée pour détecter des rayonnements bêta émis par du tritium.

En fait, l'un des avantages du dispositif de mesure selon l'invention est qu'il peut être adapté aux besoins spécifiques de mesures. Par exemple, si la zone nucléaire à investiguer ne comporte pas de tritium, la tête de mesure peut tout à fait être adaptée avec un scintillateur primaire optimisé pour les autres types de radionucléides. Par exemple, le dispositif de mesure peut comprendre plusieurs têtes de mesure différentes et on peut, à l'aide d'un bras de l'automate, changer très rapidement une tête de mesure par une autre.

Selon des configurations possibles de l'invention, le dispositif de mesure peut comprendre :
- un moyen pour topographier la surface plane à étudier (il peut par exemple s'agir d'un appareil laser) ; cela permet d'évaluer la rugosité de la surface à étudier ; et/ou
- un moyen pour prélever un échantillon de la surface à étudier (il peut par exemple s'agir d'une foreuse) ; cela peut être utile si l'on souhaite réaliser une analyse de ce prélèvement, par exemple dans le cas où on aurait observé de la radioactivité provenant de la surface étudiée ; et/ou
- un moyen pour marquer une zone particulière de la surface à étudier (par exemple un marqueur de type feutre), cette zone pouvant par exemple être une zone dans laquelle on aurait observé de la radioactivité.

L'invention propose également un système de mesure permettant de réaliser des mesures non destructives des rayonnements alpha et/ou bêta émis par une surface plane (S) d'un solide, selon la revendication 7, comprenant un dispositif de mesure tel que défini ci-dessus et une unité de traitement configurée pour acquérir et mémoriser des signaux provenant dudit au moins un SiPM de chaque tête de mesure du dispositif de mesure.

L'unité de traitement peut être intégrée au dispositif de mesure et former un seul appareil compact; elle peut également être rapportée, par exemple être un ordinateur connecté au dispositif de mesure.

Avantageusement, le système de mesure comprend en outre des moyens de localisation configurés pour localiser chaque SiPM d'une tête de mesure du dispositif de mesure. Par exemple, l'automate peut être équipé d'un moyen de localisation tel qu'un GPS (pour Global Positioning System en anglais) ou un télémètre laser, permettant de localiser l'automate dans l'espace, la localisation du ou des SiPM dans l'automate étant ensuite obtenue par la localisation de chaque tête de mesure, par rapport à l'automate (la ou les têtes de mesures étant gérées en positionnement par l'automate autonome). Le GPS permet l'utilisation du système de mesure à l'extérieur, tandis que le télémètre laser permet une utilisation à l'intérieur d'une installation en démantèlement. Le positionnement d'une tête de mesure donne un positionnement très précis de l'ordre du millimètre, déterminé par la connaissance de la localisation initiale de la tête de mesure (correspondant à la localisation de l'automate) et la localisation finale de la tête de mesure (connue par exemple par le déplacement déterminé du bras articulé auquel elle est rattachée). Les moyens de localisation permettent ainsi de relier une mesure d'un SiPM d'une tête de mesure à une position dans l'espace.

Avantageusement, le système de mesure comprend en outre au moins un écran pour visualiser une image résultant de la compilation des mesures obtenues par chaque SiPM d'une tête de mesure.

L'invention propose enfin un procédé d'utilisation d'un système de mesure tel que décrit ci-dessus pour cartographier des rayonnements alpha et/ou bêta émis par une surface plane (S) d'un solide, selon la revendication 10, ledit procédé comprenant :
a) la division fictive de la surface plane en n portions, n étant un nombre entier supérieur ou égal à 2 ;
b) le positionnement, par l'automate motorisé, d'une tête de mesure du système de mesure sur une des n portions de la surface (S) de manière à ce que la face principale dudit au moins un scintillateur solide primaire de la tête de mesure soit mise en contact avec ladite portion de la surface plane ;
c) la mesure des rayonnements alpha et/ou bêta émis par la portion de surface ;
d) la mémorisation de la mesure obtenue pour ladite portion et la mémorisation de la localisation de ladite portion ;
e) la répétition des étapes b), c) et d) pour chacune des n portions ;
f) la compilation des mesures et des localisations mémorisées, de manière à définir une cartographie des rayonnements alpha et/ou bêta émis par la surface (S).

Il est à noter que la répétition des étapes b), c) et d) peut s'effectuer par succession de l'étape b), suivie de l'étape c), suivie de l'étape d), avec retour à l'étape b), et ainsi de suite. On peut également réaliser toutes les étapes b) (placement d'une tête de mesure en chacune des n portions), pour ensuite réaliser toutes les étapes c), et ensuite toutes les étapes d).

Le système de mesure selon l'invention permet une détection surfacique de radionucléides difficilement mesurables. En particulier, le système de mesure selon l'invention permet de réaliser des cartographies de surfaces planes solides contaminées par des radioéléments émettant des rayonnements alpha et/ou bêta, ce qui est particulièrement utile à la fin d'un chantier de démantèlement pour le qualifier vis-à-vis des autorités de sûreté.

Un avantage du système de mesure selon l'invention est la simplicité de son utilisation. On peut obtenir directement l'image de la radioactivité présente en surface de la surface solide.

La surface plane solide peut être horizontale, verticale, ou avoir toute autre inclinaison. Cette surface plane peut par exemple être le sol d'une installation, un mur, un plafond. Dans certains cas particuliers dépendant à la fois de la taille physique de la surface à étudier et de la taille physique de la tête de mesure, une surface plane particulière, par exemple une fissure, pourra être mesurée par la tête de mesure positionnée par l'automate.

On entend par surface plane une surface plane ou sensiblement plane, c'est-à-dire ayant une planéité avec des écarts entre les minimas et les maximas d'au plus 5 mm.

On peut également envisager de réaliser une découpe de l'échantillon à analyser, par exemple un carottage, et utiliser le système de mesure pour mesurer la contamination en profondeur en appliquant la face principale du ou des scintillants primaires d'une tête de mesure sur la tranche de la carotte dans le sens de la hauteur. L'utilisation du système de mesure est par exemple possible sur des carottes en béton ou d'autres types de matériaux ayant une partie plane.

### BRÈVE DESCRIPTION DES DESSINS

D'autres objectifs, caractéristiques et avantages apparaîtront à la lecture de la description détaillée qui suit, en référence aux dessins donnés à titre illustratif et non limitatif, parmi lesquels :
- la figure 1 représente, de manière schématisée et selon une vue en coupe, un exemple de réalisation d'un dispositif de mesure selon l'invention ;
- la figure 2 représente, selon une vue de dessous, un exemple d'une pluralité de scintillants solides primaires agencés en matrice au sein d'une tête de mesure ;
- la figure 3 représente, selon une vue en coupe, un autre exemple de réalisation d'une tête de mesure d'un dispositif de mesure selon l'invention ;
- la figure 4 représente, de manière schématique, un exemple de réalisation d'un système de mesure selon l'invention ;
- les figures 5a et 5b représentent respectivement une image prise à l'aide du système de mesure selon l'invention (figure 5a) et une cartographie regroupant plusieurs images prise à l'aide de ce système (figure 5b).

### EXPOSÉ DÉTAILLÉ DE MODES DE RÉALISATION PARTICULIERS

Le dispositif de mesure selon l'invention est prévu pour que le ou les scintillants solides primaires d'au moins une tête de mesure soi(en)t positionné(s), par l'automate motorisé, au contact de la surface solide à étudier, ce qui permet d'avoir la meilleure résolution spatiale possible et la meilleure limite de détection possible pour les radionucléides difficilement mesurables.

Le système de mesure (comprenant le dispositif de mesure et l'unité de traitement) est conçu pour une utilisation de terrain, c'est-à-dire qu'il est portable ou transportable. Il est notamment adapté à la cartographie de radionucléides alpha et bêta dans des installations en démantèlement, dans des déchets en vrac ou en fût, dans des installations nucléaires en fonctionnement. L'automate de positionnement peut être programmé pour amener la tête de mesure à un endroit particulier qu'il faut analyser.

Dans les sites nucléaires, les rayonnements β⁻ proviennent principalement du tritium ³H, du chlore ³⁶Cl, du carbone ¹⁴C et du Strontium ⁹⁰Sr. Les rayonnements alpha sont, quant à eux, dus principalement à l'uranium, au plutonium et à l'américium.

Le ou les scintillants solides utilisés dans le cadre de la présente invention sont destinés à convertir un rayonnement ionisant, de type alpha ou bêta, en photons. Ils peuvent être en des matériaux organiques ou inorganiques ; ils peuvent par exemple être en ZnS, en CaF₂, ou encore en plastiques scintillants, en cristaux scintillants. En adaptant le choix du matériau du scintillant solide, ainsi que son épaisseur, on peut détecter un ou plusieurs radionucléides émetteurs alpha et/ou bêta ; on peut donc adapter au mieux les scintillants aux besoins de détection et de résolution recherchés. Le ou les scintillants solides sont sous forme de plaques (ils sont plans) et ont une épaisseur comprise entre 500 micromètres et 5 millimètres.

On peut en outre disposer des éléments de séparation opaques aux photons aux interfaces entre les scintillants solides primaires adjacents afin de rendre ces scintillants optiquement indépendants. Cela permet d'éviter que des photons entrant dans un scintillant ne se propagent dans un scintillant adjacent, ce qui au final permet d'améliorer la résolution spatiale de la cartographie recherchée. On peut par exemple disposer des feuilles en aluminium de 100 micromètres d'épaisseur sur les bords latéraux des scintillants primaires, les bords latéraux étant les bords reliant deux faces principales parallèles, l'une des deux faces principales étant destinée à être en contact avec la surface solide à étudier. On rappelle en effet que le ou les scintillants solides primaires ont une face principale qui est destinée à être mise en contact avec la surface solide à analyser.

On peut également avoir un empilement d'au moins deux scintillants solides, un scintillant primaire et un scintillant secondaire. Cela permet d'avoir une meilleure luminosité pour une grande gamme en énergies de différents types de radiations.

On rappelle qu'on utilise le terme « primaire » et le terme « secondaire » pour distinguer un scintillant solide (dit primaire), qui est destiné à être en contact avec la surface solide à analyser, d'un éventuel autre scintillant solide (dit secondaire), qui est empilé sur le scintillant solide primaire.

Le ou les scintillants solides (primaire(s) et éventuellement secondaire(s)) sont disposés dans le boîtier opaque du dispositif de mesure de manière à être amovibles; ils peuvent ainsi être changés très facilement pour pouvoir affiner une mesure ou pour adapter l'appareil en fonction des radionucléides à mesurer.

On peut utiliser une pluralité de détecteurs SiPM agencés sous forme matricielle. Cela permet d'améliorer la résolution spatiale de la détection.

Le dispositif de mesure peut comprendre plusieurs têtes de mesure qui peuvent ou non être utilisées en même temps. On peut par exemple utiliser plusieurs têtes de mesure interchangeables, les têtes de mesure étant utilisées à tour de rôle afin d'optimiser la mesure de certains radionucléides par rapport à d'autres. On peut également préférer une tête de mesure parmi les têtes de mesure disponibles en fonction du radionucléide à analyser. Enfin, on peut également utiliser en même temps plusieurs têtes de mesure afin de couvrir une surface plus grande et ainsi augmenter la vitesse de mesure.

Un SiPM (pour « Silicon PhotoMultiplier en anglais), c'est-à-dire Photomultiplicateur en Silicium), également appelé « détecteur SiPM » ci-après, fonctionne selon le principe de fonctionnement connu d'un détecteur de photons unique. Il permet de convertir les photons produits par le phénomène de scintillation en des signaux électriques correspondants. Plus précisément, le détecteur SiPM convertit les photons en électrons et les multiplie afin de construire une impulsion électrique. En utilisant un détecteur SiPM plutôt qu'un détecteur photomultiplicateur classique, on améliore la résolution spatiale de l'image obtenue (typiquement, on obtient une résolution de l'ordre du millimètre). Un capteur CCD (pour « Charge Coupled Device » en anglais) ou un capteur CMOS (pour « Complementary Metal Oxide Semiconductor » en anglais) a une meilleure résolution, mais a une taille limitée et n'est pas adapté à une mesure de terrain. Le détecteur SiPM produit un signal électrique, qui est ensuite trié, numérisé et enregistré par l'unité de traitement, qui enregistre également la position du SiPM de la tête de mesure lors de la mesure, cette position étant fournie par le moyen de localisation (par exemple, GPS).

Au final, le choix du nombre de détecteurs SiPM, ainsi que le choix du ou des scintillateurs dans une même tête de mesure dépendent du type de radionucléides à détecter et de la résolution spatiale à obtenir. En ce qui concerne les scintillants, le type de scintillant qui sera optimal pour mesurer des rayonnements β⁻ de tritium ne sera pas forcément de même nature et/ou de même épaisseur que le type de scintillant qui sera optimal pour mesurer des rayonnements alpha. Si un même scintillant permet à la fois de mesurer des rayonnements bêta et des rayonnements alpha, on pourra faire varier l'épaisseur du matériau scintillant pour s'adapter au besoin du terrain. On peut ainsi avoir une tête de mesure avec un scintillateur ayant une première épaisseur et une autre tête de mesure avec un scintillateur ayant une deuxième épaisseur, le choix de la tête de mesure se faisant en fonction du rayonnement à détecter.

La taille et le poids du système de mesure, et plus particulièrement du dispositif de mesure, sont adaptables dans une large gamme afin de s'adapter au mieux aux différents besoins (par exemple, une seule tête de mesure ayant un seul SiPM pour réaliser des mesures ponctuelles dans des endroits difficiles d'accès ou exigus, ou bien une pluralité de têtes de mesure ayant un ou plusieurs SiPM pour une mesure systématique d'une large surface).

La visualisation de la radioactivité peut être faite directement sur un écran intégré au dispositif de mesure (le système de mesure formant alors un appareil compact) ou bien sur un écran portatif, par exemple de type tablette, associé au dispositif de mesure, cet écran pouvant être amovible.

Il en est de même pour l'unité de traitement, qui peut être intégrée au dispositif de mesure (par exemple, l'unité de traitement peut être un système électronique basé sur des ASICs (pour « Application Specific Integrated Circuit » en anglais) et des FPGAs (pour « Field Programmable Gâte Arrays » en anglais) ou tout autre système de traitement de signal) ou qui peut être externe au dispositif de mesure (le dispositif peut par exemple être connecté à un ordinateur). L'unité de traitement permet le traitement et l'enregistrement/mémorisation des données fournies par le ou les capteurs SiPM.

Il en est de même pour le moyen de localisation (GPS ou télémètre laser, par exemple), qui peut être intégré au dispositif de mesure ou raccordé à ce dernier.

Au final, les données de mesure de radioactivité sont numérisées, puis analysées et affichées sur un système de visualisation tel qu'un écran. Les données de mesure de radioactivité sont en outre mises en relation avec le positionnement de la ou des têtes de mesure en fonctionnement (par exemple par localisation de l'automate avec un GPS ou un télémètre, puis localisation des têtes de mesure par rapport à l'automate) pour permettre de reconstruire la cartographie des radionucléides analysés. La cartographie de contamination recherchée est assurée, d'une part, par la localisation de l'automate et, d'autre part, par le déplacement précis de l'automate et la connaissance précise du positionnement du ou des bras de l'automate.

Le système de mesure est sensible de manière linéaire à l'énergie déposée par le rayonnement qu'il enregistre. Il suffit d'avoir une procédure indépendante d'étalonnage avec des sources de radionucléides calibrées pour pouvoir étalonner le système de mesure.

L'amplitude du signal d'un SiPM étant fonction du nombre de photons détectés, lui-même étant directement relié à la quantité d'énergie perdue par le rayonnement dans le scintillateur attenant au SiPM, la tête de mesure du dispositif permet de caractériser le type et la nature des radionucléides émetteurs. En effet, le dispositif de mesure est capable de reconstruire le spectre en énergie d'émission des rayonnements détectés, ce dernier étant caractéristique et unique pour chaque radionucléide.

Le système de mesure est conçu pour être utilisé sur le terrain et obtenir une cartographie de la mesure de radionucléides. Son utilisation est liée à l'obtention d'un fichier image qu'on relie à une position dans l'espace grâce au moyen de localisation de l'automate.

L'automate motorisé, grâce par exemple à au moins un bras articulé, permet de déplacer une ou plusieurs têtes de mesure, ce qui permet de pouvoir réaliser des mesures à l'aide du dispositif de mesure selon l'invention dans un milieu très hostile pour l'individu ou bien encore réaliser une mesure nécessitant un temps de mesure long.

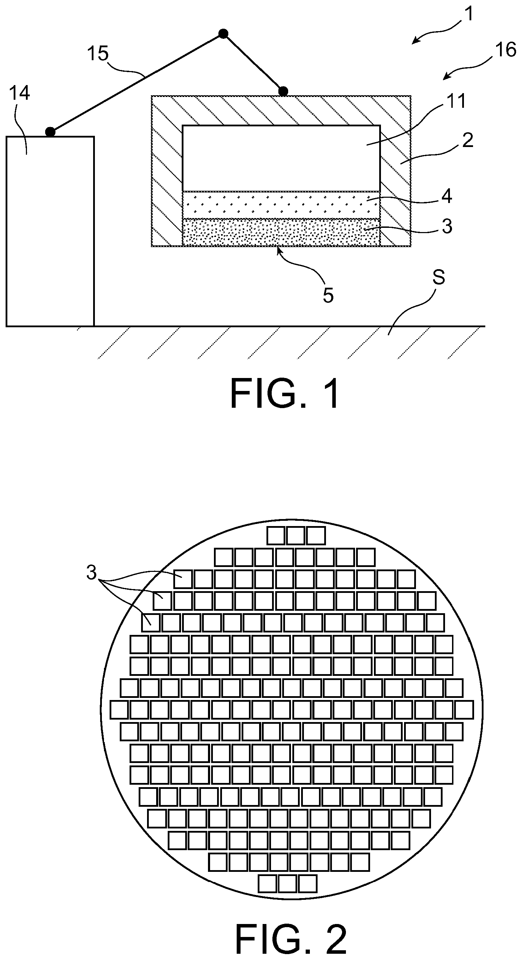

En référence à la figure 1 est représenté un dispositif de mesure 1 selon l'invention. Il comporte une tête de mesure 16 comprenant un boîtier 2 opaque à la lumière visible et aux rayonnements alpha et bêta, par exemple un boîtier dont les parois sont en plomb, ayant une cavité 11 ouverte dans laquelle sont logés le ou les scintillants solides et le ou les SiPM, le ou les scintillants solides étant couplés optiquement aux SiPM, par exemple à l'aide d'une colle optique. Le dispositif de mesure comporte également un automate motorisé 14 muni d'au moins un bras 15 articulé, éventuellement dépliable et/ou télescopique, qui permet de déplacer et d'amener au moins une tête de mesure au contact de la surface à étudier. L'automate motorisé 14 se déplace jusqu'à un endroit déterminé et, à l'aide d'un bras 15, amène une tête de mesure au contact de la surface plane à étudier.

Le système de mesure selon l'invention permet d'obtenir une cartographie de radionucléides avec une excellente résolution spatiale.

Le ou les scintillants solides primaires 3 d'une tête de mesure 16 comportent une face principale 5 destinée à être en contact avec la surface solide (S) de l'échantillon à analyser.

Dans la figure 1, nous avons représenté une seule tête de mesure 16 et un seul bras articulé 15 ; dans la tête de mesure, sont représentés un seul scintillant solide primaire 3 et un seul SiPM 4. Mais l'automate peut tout à fait comprendre plusieurs têtes de mesure et plusieurs bras articulés. Chaque tête de mesure peut comprendre plusieurs scintillants solides primaires et plusieurs SiPM.

Le scintillant solide primaire 3 est positionné dans la cavité de la tête de mesure de manière à fermer cette cavité et à former une paroi extérieure de la cavité. La face principale 5 du scintillant primaire 3 est ainsi au même niveau que les bords de l'ouverture de la cavité, ce qui va permettre un contact de cette face principale 5 avec la surface solide (S). Ce contact va permettre aussi d'assurer une étanchéité de la cavité à la lumière.

Le dispositif de mesure peut en outre comporter un moyen optionnel de nettoyage (non représenté) qui est configuré pour débarrasser la surface de la tête de mesure, destinée à être en contact avec la surface plane à étudier, d'éventuelles impuretés (poussières ou autres) afin de minimiser les contaminations croisées entre les mesures. Le moyen de nettoyage peut par exemple être un rouleau en rotation autour d'un axe et déplaçable en translation sur la surface de la tête de mesure destinée à être en contact avec la surface plane à étudier.

Dans la figure 1, la tête de mesure du dispositif de mesure 1 a été représentée à distance de la surface solide (S). Il est bien entendu que, lors de la mesure, la face principale 5 du ou des scintillants primaires de la tête de mesure devra être en contact avec cette surface solide (S).

Dans la figure 2 est représentée une pluralité de scintillants solides primaires 3, agencés sous forme matricielle, dans une tête de mesure.

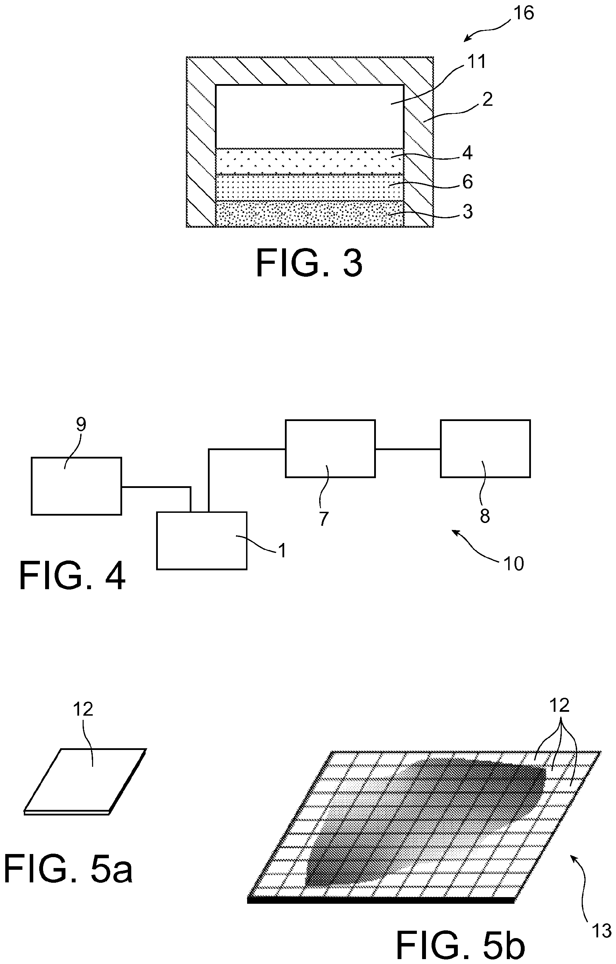

Dans la figure 3 est représentée, selon une vue en coupe de côté, une tête de mesure comportant un empilement d'un scintillant solide primaire 3 et d'un scintillant solide secondaire 6.

Dans la figure 4 est représenté un système de détection 10 selon l'invention comportant un dispositif de mesure 1, une unité de traitement 7, un écran 8 et un moyen de localisation 9.

A titre d'exemple, pour mesurer la radioactivité d'une surface solide donnée contaminée avec du tritium, on peut utiliser un dispositif de mesure ayant un ensemble de 1 à 256 scintillateurs solides primaires agencés en matrice, par exemple des scintillateurs en ZnS, en CaF₂, en plastiques ou en cristaux, de dimensions allant de quelques mm² à quelques dizaines mm², couplés optiquement à un ensemble de 1 à 256 SiPM agencés en matrice.

Si la surface solide à analyser est très étendue, on effectue une première mesure en un premier endroit donné, dont la localisation et le temps de pose sont mémorisés et on obtient une première image 12 (figure 5a). L'automate motorisé déplace la tête de mesure en un second endroit donné et on obtient une seconde image et ainsi de suite jusqu'à avoir pris des images de toute la surface. On regroupe ensuite ces images et, en fonction de leurs localisations respectives, on reconstitue une cartographie 13 (figure 5b) de la contamination de l'ensemble de la surface.

### REFERENCES CITEES

[1] « Calculs et mesures de l'activation induite dans les bétons de protection d'un accélérateur d'ions de haute énergie », Radioprotection 2000, vol. 35, n°3, pages 311 à 334
**[2]** JP 3 041386 A [3] US 5936240 A

## Revendications

1. Dispositif de mesure (1) non destructive des rayonnements alpha et/ou bêta émis par une surface plane (S) d'un solide, le dispositif comprenant :
- au moins une tête de mesure (16) qui comprend :
• au moins un scintillateur solide primaire (3) ayant une face principale (5) plane destinée à être mise en contact avec une portion de la surface plane (S) ;
• au moins un photomultiplicateur en silicium (SiPM) (4), chaque SiPM étant couplé optiquement à un scintillateur solide primaire (3) ;
• un boîtier (2) opaque à la lumière visible et aux rayonnements alpha et bêta ayant une cavité (11) ouverte destinée à loger ledit au moins un scintillateur solide primaire et ledit au moins un SiPM, ledit scintillateur solide primaire étant agencé pour fermer la cavité et former une paroi externe du boitier, de manière à permettre la mise en contact dudit scintillateur primaire avec la portion de surface (S) ;
- un automate motorisé (14), configuré pour déplacer une tête de mesure et la placer au contact de la surface plane (S).

2. Dispositif de mesure selon la revendication 1, dans lequel une tête de mesure (16) comprend une pluralité de SiPM (4) électriquement indépendants les uns des autres et agencés dans un même plan sous forme matricielle.

3. Dispositif de mesure selon la revendication 2, dans lequel une tête de mesure (16) comprend une pluralité de scintillateurs solides primaires (3) agencés dans un même plan sous forme matricielle, les scintillateurs solides primaires (3) étant réalisés dans un matériau identique et ayant une même épaisseur.

4. Dispositif de mesure selon la revendication 3, dans lequel, dans au moins une tête de mesure (16), le nombre de scintillateurs solides primaires (3) est égal ou inférieur au nombre de SiPM (4).

5. Dispositif de mesure selon la revendication 3 ou la revendication 4, dans lequel une tête de mesure (16) comprend en outre des éléments de séparation en matériau opaque aux photons, qui sont disposés aux interfaces des scintillateurs solides primaires adjacents, de manière à rendre les scintillateurs solides primaires d'une même tête de mesure optiquement indépendants les uns des autres.

6. Dispositif de mesure selon l'une quelconque des revendications 1 à 5, dans lequel une tête de mesure (16) comprend en outre au moins un scintillateur solide secondaire (6), ledit scintillateur solide secondaire (6) étant agencé empilé sur un scintillateur solide primaire (3), en contact avec une face opposée à la face principale dudit scintillateur solide primaire.

7. Système de mesure (10) non destructive des rayonnements alpha et/ou bêta émis par une surface plane (S) d'un solide, comprenant un dispositif de mesure selon l'une quelconque des revendications 1 à 6 et une unité de traitement (7) configurée pour acquérir et mémoriser des signaux provenant dudit au moins un SiPM de chaque tête de mesure du dispositif de mesure (1).

8. Système de mesure selon la revendication 7, comprenant en outre des moyens de localisation (9) configurés pour localiser chaque SiPM d'une tête de mesure (16) du dispositif de mesure.

9. Système de mesure selon la revendication 7 ou la revendication 8, comprenant en outre au moins un écran (8) pour visualiser une image résultant de la compilation des mesures obtenues par chaque SiPM d'une tête de mesure.

10. Procédé d'utilisation d'un système de mesure selon l'une quelconque des revendications 7 à 9 pour cartographier des rayonnements alpha et/ou bêta émis par une surface plane (S) d'un solide, ledit procédé comprenant :
a) la division fictive de la surface plane en n portions, n étant un nombre entier supérieur ou égal à 2
b) le positionnement, par l'automate motorisé, d'une tête de mesure du système de mesure (10) sur l'une des n portions de la surface (S) de manière à ce que la face principale dudit au moins un scintillateur solide primaire de la tête de mesure soit mise en contact avec ladite portion de la surface plane ;
c) la mesure des rayonnements alpha et/ou bêta émis par la portion de surface ;
d) la mémorisation de la mesure obtenue pour ladite portion et la mémorisation de la localisation de ladite portion ;
e) la répétition des étapes b), c) et d) pour chacune des n portions ;
f) la compilation des mesures et des localisations mémorisées, de manière à définir une cartographie des rayonnements alpha et/ou bêta émis par la surface (S).

## Patentansprüche

1. Vorrichtung zur zerstörungsfreien Messung (1) der von einer ebenen Oberfläche (S) eines Feststoffs ausgehenden Alpha- und/oder Betastrahlung, wobei die Vorrichtung umfasst:
- mindestens einen Messkopf (16), der umfasst:
• mindestens einen primären Fest-Szintillator (3) mit einer ebenen Hauptfläche (5), die bestimmt ist, mit einem Abschnitt der ebenen Oberfläche (S) in Kontakt versetzt zu sein;
• mindestens einen Fotomultiplikator aus Silizium (SiPM) (4), wobei jeder SiPM mit einem primären Fest-Szintillator (3) optisch gekoppelt ist;
• ein für sichtbares Licht und die Alpha- und Beta-Strahlen undurchlässiges Gehäuse (2) mit einem offenen Hohlraum (11), der zur Aufnahme des mindestens einen primären Fest-Szintillators und des mindestens einen SiPM bestimmt ist, wobei der primäre Fest-Szintillator eingerichtet ist, um den Hohlraum zu verschließen und eine Außenwand des Gehäuses derart zu bilden, dass das Inkontaktversetzen des primären Szintillators mit dem Oberflächenabschnitt (S) gestattet ist;
- einen motorisierten Automaten (14), der ausgelegt ist, um einen Messkopf zu verlagern und um ihn in Kontakt mit der ebenen Oberfläche (S) zu platzieren.

2. Messvorrichtung nach Anspruch 1, wobei ein Messkopf (16) eine Vielzahl von SiPMs (4) umfasst, die voneinander elektrisch unabhängig und in derselben Ebene in Matrixform eingerichtet sind.

3. Messvorrichtung nach Anspruch 2, wobei ein Messkopf (16) eine Vielzahl von primären Fest-Szintillatoren (3) umfasst, die in derselben Ebene in Matrixform eingerichtet sind, wobei die primären Fest-Szintillatoren (3) aus einem identischen Material hergestellt sind und dieselbe Dicke haben.

4. Messvorrichtung nach Anspruch 3, wobei in mindestens einem Messkopf (16) die Anzahl der primären Fest-Szintillatoren (3) gleich oder kleiner als die Anzahl der SiPMs (4) ist.

5. Messvorrichtung nach Anspruch 3 oder Anspruch 4, wobei ein Messkopf (16) ferner Trennelemente aus photonendichtem Material umfasst, die an den Schnittstellen der benachbarten primären Fest-Szintillatoren derart angeordnet sind, dass die primären Fest-Szintillatoren desselben Messkopfs voneinander optisch unabhängig werden.

6. Messvorrichtung nach einem der Ansprüche 1 bis 5, wobei ein Messkopf (16) ferner mindestens einen sekundären Fest-Szintillator (6) umfasst, wobei der sekundäre Fest-Szintillator (6) auf einem primären Fest-Szintillator (3) im Kontakt mit einer Fläche, die der Hauptfläche des primären Fest-Szintillators gegenüberliegt, gestapelt eingerichtet ist.

7. System zur zerstörungsfreien Messung (10) der von einer ebenen Oberfläche (S) eines Feststoffs ausgehenden Alpha- und/oder Betastrahlung, das eine Messvorrichtung nach einem der Ansprüche 1 bis 6 und eine Verarbeitungseinheit (7) umfasst, die ausgelegt ist, um Signale zu erfassen und zu speichern, die von dem mindestens einen SiPM jedes Messkopfs der Messvorrichtung (1) kommen.

8. Messsystem nach Anspruch 7, umfassend ferner Lokalisierungsmittel (9), die ausgelegt sind, um jeden SiPM eines Messkopfs (16) der Messvorrichtung zu lokalisieren.

9. Messsystem nach Anspruch 7 oder Anspruch 8, umfassend ferner mindestens einen Bildschirm (8), um ein Bild zu visualisieren, das aus der Kompilierung der von jedem SiPM eines Messkopfs erhaltenen Messungen resultiert.

10. Verfahren zur Verwendung eines Messsystems nach einem der Ansprüche 7 bis 9 zur Kartographierung der von einer ebenen Oberfläche (S) eines Feststoffs ausgehenden Alpha- und/oder Betastrahlung, wobei das Verfahren umfasst:
a) die fiktive Unterteilung der ebenen Oberfläche in n Abschnitte, wobei n eine Ganzzahl größer oder gleich 2 ist;
b) die Positionierung, durch den motorisierten Kopf, eines Messkopfs des Messsystems (10) auf einem der n Abschnitte der Oberfläche (S) derart, dass die Hauptfläche des mindestens einen primären Fest-Szintillators des Messkopfs mit dem Abschnitt der ebenen Oberfläche in Kontakt versetzt wird;
c) das Messen der vom Oberflächenabschnitt ausgehenden Alpha-und/oder Betastrahlung;
d) das Speichern der für den Abschnitt erhaltenen Messung und das Speichern der Lokalisierung des Abschnitts;
e) die Wiederholung der Schritte b), c) und d) für jeden der n Abschnitte;
f) das Kompilieren der gespeicherten Messungen und Lokalisierungen, um eine von der Oberfläche (S) ausgehende Kartographie der Alpha- und/oder Betastrahlen zu definieren.

## Claims

1. A device (1) for non-destructively measuring alpha and/or beta radiations emitted by a planar surface (S) of a solid, the device comprising:
- at least one measurement head (16) which comprises:
• at least one primary solid scintillator (3) having a planar main face (5) to be contacted with a portion of the planar surface (S);
• at least one silicon photomultiplier (SiPM) (4), each SiPM being optically coupled to a primary solid scintillator (3);
• a casing (2) opaque to visible light and to alpha and beta radiations having an open cavity (11) for housing said at least one primary solid scintillator and said at least one SiPM, said primary solid scintillator being arranged to close the cavity and form an external wall of the casing, so as to enable contacting of said primary scintillator with the surface portion (S);
- a motor-driven automaton (14), configured to move a measurement head and place it in contact with the planar surface (S).

2. The measurement device according to claim 1, wherein a measurement head (16) comprises a plurality of SiPMs (4) electrically independent of each other and arranged in a same plane in a matrix form.

3. The measurement device according to claim 2, wherein a measurement head (16) comprises a plurality of primary solid scintillators (3) arranged in a same plane in a matrix form, the primary solid scintillators (3) being made of an identical material and having a same thickness.

4. The measurement device according to claim 3, wherein, in at least one measurement head (16), the number of primary solid scintillators (3) is equal to or less than the number of SiPMs (4).

5. The measurement device according to claim 3 or claim 4, wherein a measurement head (16) further comprises separation elements of a photon-opaque material, which are disposed at the interfaces of the adjacent primary solid scintillators, so as to make the primary solid scintillators of a same measurement head optically independent of each other.

6. The measurement device according to any of claims 1 to 5, wherein a measurement head (16) further comprises at least one secondary solid scintillator (6), said secondary solid scintillator (6) being arranged stacked on a primary solid scintillator (3), in contact with a face opposite to the main face of said primary solid scintillator.

7. A system (10) for non-destructively measuring alpha and/or beta radiations emitted by a planar surface (S) of a solid, comprising a measurement device according to any of claims 1 to 6 and a processing unit (7) configured to acquire and store signals from said at least one SiPM of each measurement head of the measurement device (1).

8. The measurement system according to claim 7, further comprising locating means (9) configured to locate each SiPM of a measurement head (16) of the measurement device.

9. The measurement system according to claim 7 or claim 8, further comprising at least one screen (8) to view an image resulting from the compilation of the measurements obtained by each SiPM of a measurement head.

10. A method for operating a measurement system according to any of claims 7 to 9 to map alpha and/or beta radiations emitted by a planar surface (S) of a solid, said method comprising:
a) fictitiously dividing the planar surface into n portions, n being an integer greater than or equal to 2
b) the motorized automaton positioning a measurement head of the measurement system (10) on one of the n portions of the surface (S) so that the main face of said at least one primary solid scintillator of the measurement head is contacted with said portion of the planar surface;
c) measuring the alpha and/or beta radiations emitted by the surface portion;
d) storing the measurement obtained for said portion and storing the location of said portion;
e) repeating steps b), c) and d) for each of the n portions;
f) compiling the stored measurements and locations, so as to define a map of the alpha and/or beta radiations emitted by the surface (S).
